Europäisches Patentamt

European Patent Office

Office européen des brevets

(11) Veröffentlichungsnummer: **0 558 814 A1**

# EUROPÄISCHE PATENTANMELDUNG

(21) Anmeldenummer: **92121358.3**

(22) Anmeldetag: **16.12.92**

(51) Int. Cl.5: **C08L 67/06**, //(C08L67/06, 76:02,71:02)

(30) Priorität: **03.01.92 DE 4200045**

(43) Veröffentlichungstag der Anmeldung:
**08.09.93 Patentblatt 93/36**

(84) Benannte Vertragsstaaten:
**BE DE ES FR GB IT SE**

(71) Anmelder: **BASF Aktiengesellschaft
Carl-Bosch-Strasse 38
D-67063 Ludwigshafen(DE)**

(72) Erfinder: **Duell-Muehlbach, Ines
Am Zaunruecken 20
W-6718 Gruenstadt(DE)**

(54) **Härtbare Formmassen.**

(57) Die Anmeldung betrifft schrumpfarm härtbare Formmassen auf Basis von ungesättigten Polyesterharzen, die gesättigte, thermoplastische Polyester sowie ein Polyoxyalkylen, insbesondere ein Ethylenoxid/Propylenoxid-Blockcopolymeres, enthalten. Die Formmassen sind zu Formteilen mit verbesserter Lackierbarkeit härtbar.

EP 0 558 814 A1

Die Erfindung betrifft schrumpfarm härtbare Formmassen auf Basis von ungesättigten Polyesterharzen, die zu Formteilen mit verbesserter Lackierbarkeit härtbar sind.

Formmassen auf Basis von faserverstärkten ungesättigten Polyesterharzen werden in zunehmendem Maße zur Herstellung von Formteilen, insbesondere im Automobilbau, eingesetzt. Sie werden dabei vorwiegend in Form von eingedicktem, flächigem Halbzeug, sogenannten "sheet molding compounds" (SMC) oder als teigförmige Formmasse, sogenannte "bulk molding compounds" (BMC) verarbeitet. In beiden Fällen geht man aus von einem ungesättigten Polyesterharz, das mit Verstärkungsfasern, Füllstoffen, radikalischen Initiatoren und anderen Zusatzstoffen vermischt wird. Die Verarbeitung erfolgt durch Pressen oder Extrudieren bei verhältnismäßig niedriger Temperatur um 130 bis 160°C, wobei auch komplizierte Formwerkzeuge problemlos gefüllt werden können. Die damit hergestellten Formteile weisen - insbesondere wenn den Formmassen gesättigte Polyester als schrumpfmindernde Thermoplasten zugesetzt wurden - eine ausgezeichnete Oberfläche auf. Versucht man, solche Formteile nach üblichen Methoden zu lackieren, dann zeigt sich, daß in vielen Fällen die Haftung des Lacks auf der Oberfläche zu gering ist. Es kommt zu Blasenbildung beim Lackieren bzw. zum Abplatzen des Lacks.

Der Erfindung lag also die Aufgabe zugrunde, härtbare Formmassen auf Basis von ungesättigten Polyesterharzen, die schrumpfmindernde Thermoplasten enthalten, bereitzustellen, die zu Formteilen mit guter Lackierbarkeit gehärtet werden können.

Diese Aufgabe wird erfindungsgemäß durch Zusatz eines Polyoxyalkylens zu der Formmasse gelöst.

Gegenstand der Erfindung sind demzufolge härtbare Formmassen, enthaltend

A. 100 Gew.-Teile eines ungesättigten Polyesters,
B. 20 bis 100 Gew.-Teile eines copolymerisierbaren Monomeren,
C. 5 bis 60 Gew.-Teile eines gesättigten, thermoplastischen Polyesters,
D. 2 bis 10 Gew.-Teile eines Polyoxyalkylens,
E. 0,1 bis 5 Gew.-Teile eines bei Temperaturen oberhalb von 80°C in Radikale zerfallenden Polymerisationsinitiators,
F. 0 bis 5 Gew.-Teile eines Eindickmittels,
G. 2 bis 20 Gew.-Teile Glimmer,
H. 0 bis 200 Gew.-Teile eines weiteren Füllstoffs,
I. 10 bis 250 Gew.-Teile Verstärkungsfasern,

mit der Maßgabe, daß die Formmassen keine Silikonverbindungen enthalten.

Die EP-A 369 683 beschreibt Vinylesterharze und ungesättigte Polyesterharze, die zur Verringerung der Styrolemission ein feinteiliges Wachs sowie einen Stabilisator enthält, der verhindert, daß das Wachs sich entmischt und absetzt. Der Stabilisator kann u.a. ein Polyoxyethylen/Polyoxypropylen-Blockcopolymeres sein, welches in Mengen von 0,05 bis 5, vorzugsweise von 0,1 bis 1 Gew.-% in der Gesamtmischung enthalten ist. Schrumpfmindernde Zusätze sind erwähnt. Die Harze werden bevorzugt durch Laminieren verarbeitet und nach den Beispielen mit Initiatorsystemen, die bei niedrigen Temperaturen zerfallen, kalt gehärtet.

Die EP-A 335 406 betrifft härtbare Formmassen auf Basis von ungesättigten Polyesterharzen, die ein schrumpfminderndes thermoplastisches Polymeres, vorzugsweise ein Polyvinylacetat sowie ein Silikon/Oxyalkylen-Copolymeres enthalten, welches das Fließverhalten des Harzes bei der Verarbeitung verbessern und eine formgetreue Wiedergabe beim Verpressen ermöglichen soll. Der fließverbessernde Zusatz enthält zwingend eine Silikonverbindung. Es hat sich aber gezeigt, daß derartige Silikone die Lackhaftung verschlechtern.

In der US-A 4 555 534 sind pigmentierte Polyesterharz-Formmassen beschrieben, die als schrumpfmindernde Thermoplasten ein carboxyliertes Polyvinylacetat enthalten. Zur gleichmäßigen Verteilung der Pigmente im Harz werden diesen 0,1 bis 8 Gew.-% eines oberflächenaktiven Mittels, beispielsweise eines Polyethylenoxid/Polypropylenoxid-Blockcopolymeren zugesetzt. Formteile aus Formmassen, die Polyvinylacetat als schrumpfmindernden Zusatz enthalten, weisen aber eine schlechtere Lackierbarkeit aus als solche, die gesättigte Polyester enthalten.

Zu den einzelnen Komponenten der erfindungsgemäßen Formmassen ist folgendes zu sagen:

A) Ungesättigte Polyester (UP) sind Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.

Besonders bevorzugt sind Polyesterharze aus Maleinsäure, gegebenenfalls zusammen mit o-Phthalsäure einerseits und Diolen, wie Dipropylenglykol, Diethylenglykol und/oder Propandiol-1,2 andererseits.

B) Als Comonomere kommen die üblichen Vinyl- und Allylverbindungen in Frage, bevorzugt Styrol, α-Methylstyrol, Vinyltoluol, Methylmethacrylat, Diallylphthalat und Diallylisophthalat. Sie sind in den Formmassen in Mengen von 20 bis 100 Gew.-Teilen, bezogen auf A, enthalten.

C) Gesättigte Polyester sind Veresterungsprodukte einer $C_4$-$C_{12}$-Dicarbonsäure, wie Adipinsäure, Sebacinsäure, Phthal-, Iso- und Terephthalsäure, aliphatischen, cyclischen oder polycyclischen Dicarbonsäuren und ihren Substitutionsprodukten wie Tetra- und Hexahydrophthalsäure, Hexachlorendomethylentetrahydrophthalsäure einerseits und $C_2$-$C_8$-Alkandiolen, wie Ethylenglykol, Propandiol-1,2, Butandiol-1,3, Ethergruppen-haltigen Diolen, wie Di-, Tri-, Tetra- und höheren Polyethylen- und -propylenglykolen andererseits.

Bis zu 10 Mol-% der Dicarbonsäuren kommen durch Diisocyanate, wie Toluylendiisocyanat,, Hexamethylendiisocyanat, "Isophoron"diisocyanat oder Diphenylmethandiisocyanat, ersetzt werden oder bis zu 10 Mol-% der Diole durch Bisepoxide, wie Bisphenol-A-diglycidylether, Tetra- oder Hexahydrophthalsäurediglycidylester, Bis-(epoxipropyl)-anilin und andere.

Der Einbau der genannten Isocyanate oder Epoxide kann zur Kettenverlängerung von Vorkondensaten benutzt werden. Bevorzugt gesättigte Polyester C) besitzen Säurezahlen von 3 bis 30 und als Zahlenmittel bestimmte Molekulargewichte $\overline{M}_n$ von 800 bis 10.000, insbesondere von 1200 bis 6000. Die gesättigten Polyester sind im allgemeinen in der Mischung A + B löslich, mit dem Copolymerisat aus A + B im gehärteten Zustand aber unverträglich. Sie sind in der Formmasse in Mengen von 5 bis 60, vorzugsweise von 10 bis 50 Gew.-Teilen, bezogen auf A, enthalten.

D) Geeignete Polyoxyalkylene sind Polyethylenoxid, Polypropylenoxid, sowie Copolymere von Ethylenoxid und Propylenoxid. Besonders bevorzugt sind Blockcopolymere aus 10 bis 80 Mol-% Polyethylenoxid und 90 bis 20 Mol-% Polypropylenoxid mit einer Molmasse von 1000 bis 15000. Besonders bevorzugt sind flüssige bis wachsartige Produkte, insbesondere aus der Reihe der ®PLURONIC PE-Marken der BASF. Sie sind in den Formmassen in Mengen von 2 bis 10, vorzugsweise von 3 bis 8 Gew.-Teilen, bezogen auf A, enthalten.

E) Geeignete Peroxide, die bei Temperaturen oberhalb von 80°c, vorzugsweise oberhalb von 100°C in Radikale zerfallen, sind z.B. tert.-Butylperoxid, tert.-Butylperbenzoat, 1,1-di-(tert.Butylperoxy)-3,3,5-trimethylcyclohexan und tert.-Butylperoxy-isopropylcarbonat.

Ihre Halbwertszeit bei 80°C soll vorzugsweise größer als 100 h sein.

Sie werden den Formmassen in Mengen von 0,1 bis 5, vorzugsweise von 0,5 bis 3 Gew.-Teilen, bezogen auf A, zugesetzt.

F) Geeignete Verdickungsmittel sind z.B. Oxide oder Hydroxide des Lithiums, Magnesiums, Calciums, Aluminiums oder Titans. Bevorzugt ist Magnesiumoxid. Die Verdickungsmittel werden den Formmassen in Mengen von 0 bis 5, vorzugsweise von 0,5 bis 3 Gew.-Teile, bezogen auf A, zugesetzt.

G) Eine besonders gute Lackierbarkeit erhält man, wenn man der Formmasse 2 bis 20 Gew.-Teile Glimmer, bezogen auf A, zusetzt.

H) Geeignete Füllstoffe sind die üblichen feinpulvrigen oder körnigen anorganischen Füllstoffe, wie Kreide, Kaolin, Quarzmehl, Dolomit, Schwerspat, Metallpulver, disperse Kieselsäure, Aluminiumoxidhydrat, Zement, Talkum, Kieselgur, Holzmehl, Holzspäne, Pigmente. Sie werden in Mengen von 0 bis 200 Gew.-Teilen, vorzugsweise 2 bis 150 Gew.-Teilen, bezogen auf A, eingesetzt.

I) Geeignete Verstärkungsfasern sind anorganische oder organische Fasern als Rovings oder flächige, gegebenenfalls daraus gewebte Gebilde, wie Matten, z.B. aus Glas, Kohlenstoff, Asbest, Cellulose und synthetischen organischen Fasern, wie Polycarbonsäureester, Polycarbonate und Polyamide. Die Verstärkungsfasern werden in Mengen von 10 bis 250 Gew.-Teilen, bezogen auf A, eingesetzt.

Darüber hinaus können die Formmassen weitere übliche Zusatzstoffe, wie Inhibitoren, Trennmittel oder Farbpasten enthalten.

Die Formmassen können auf übliche Weise als eingedicktes flächiges Halbzeug (SMC) zu Formteilen verpreßt und gehärtet werden, oder als teigige Masse (BMC) durch Spritzgießen geformt und zu Fertigteilen gehärtet werden.

Die Fertigteile können mit üblichen, Bindemittel und Farbpigmente enthaltenden Lacken lackiert werden. Sie zeigen eine sehr gute Lackhaftung, die auch bei Einwirkung mechanischer Kräfte, z.B. bei Bewitterung, Kratzen oder Wischen mit rauhen Gegenständen weitgehend erhalten bleibt. Derartige lackierte Formteile finden insbesondere bei Automobilteilen und im Sanitärbereich Anwendung.

Die im Beispiel genannten Teile und Prozente beziehen sich auf das Gewicht.

Beispiel

Eine Formmasse wurde durch Vermischen folgender Komponenten hergestellt:

94,6 Teile     eines unges. Polyesterharzes (65 %ig in styrolischer Lösung) auf Basis Maleinsäureanhydrid und Propylenglykol-1,2 werden mit

| 5,4 Teilen | eines ges. Polyesters (55 %ig, in styrolischer Lösung), hergestellt aus Adipinsäure, Ethylenglykol und Propylenglykol intensiv vermischt. Dieser Mischung werden |
| 5,4 Teile | eines Blockcopolymeren aus Propylenoxid und Ethylenoxid, mit einem Polyethylenoxid/Polypropylenoxid-Verhältnis von 30:70, Molekulargewicht etwa 4000 (®PLURONIC PE 4300 der BASF), zugefügt. |
| 1,7 Teile | tert.-Butylperbenzoat |
| 4,7 Teile | Zink-Stearat |
| 155 Teile | Kreidepulver |
| 6,8 Teile | Glimmer M |
| | Nach intensivem Vermischen aller Komponenten werden |
| 3,4 Teile | Magnesiumoxid-Paste als Eindickmittel zugegeben. |
| | Die so zübereitete Paste wird unter Aufrieseln von |
| 15 Gew.-% | Schnittglas der Faserlänge 26 mm auf einer konventionellen SMC-Anlage zu flächigem Halbzeug verarbeitet. |

Nach einer Reifedauer von wenigen Tagen wird das Halbzeug in konventionellen Preßwerkzeugen bei einer Werkzeugtemperatur von ca. 140°C und einem Preßdruck von ca. 80 bar zu Formteilen verarbeitet.

Die erkalteten Formteile werden unter Verwendung eines Lacks auf Polyurethanbasis mit Titandioxid als Pigment lackiert.

Nach dem endgültigen Aushärten des Lacks zeigt sich im Gitterschnittest, daß keine Lackpartikel am Teststreifen zurückbleiben. Ebenso läßt sich der Lack mit einem scharfen Messer nur mühsam unter Gewaltanwendung vom Substrat kratzen.

Die Lackhaftung wurde folgendermaßen gemessen: Auf die lackierte Oberfläche wurde mittels Skalpell eine gitterartige Anordnung von Schnitten aufgebracht. Darauf wurde ein Streifen Tesa-Film aufgebracht, dieser wurde abgezogen und es wurde überprüft, ob sich Teile des Lacks vom Substrat gelöst haben und am Streifen haften.

Versuche an Formteilen ohne Zusatz des Polyethylen/Polypropylen-Copolymeren zeigten schlechtere Lackhaftung.

**Patentansprüche**

1. Härtbare Formmassen, enthaltend
   A. 100 Gew.-Teile eines ungesättigten Polyesters,
   B. 20 bis 100 Gew.-Teile eines copolymerisierbaren Monomeren,
   C. 5 bis 60 Gew.-Teile eines gesättigten, thermoplastischen Polyesters,
   D. 2 bis 10 Gew.-Teile eines Polyoxyalkylens,
   E. 0,1 bis 5 Gew.-Teile eines bei Temperaturen oberhalb von 80°C in Radikale zerfallenden Polymerisationsinitiators,
   F. 0 bis 5 Gew.-Teile eines Eindickmittels,
   G. 2 bis 20 Gew.-Teile Glimmer,
   H. 0 bis 200 Gew.-Teile eines weiteren Füllstoffs,
   I. 10 bis 250 Gew.-Teile Verstärkungsfasern,
   mit der Maßgabe, daß die Formmassen keine Silikonverbindungen enthalten.

2. Härtbare Formmassen nach Anspruch 1, dadurch gekennzeichnet, daß das Polyoxyalkylen ein Ethylenoxid/Propylenoxid-Blockcopolymeres ist.

3. Lackierte Fertigteile, hergestellt aus den Formmassen nach Anspruch 1 durch Härtung bei Temperaturen oberhalb 80°C und Lackieren mit üblichen, Bindemittel und Farbpigmente enthaltenden Lacken.

Europäisches
Patentamt

**EUROPÄISCHER RECHERCHENBERICHT**

Nummer der Anmeldung

EP 92 12 1358

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 139 330 (CHEMISCHE WERKE ALBERT) * Seite 2, Zeile 7 - Zeile 9; Ansprüche 1,2,5-8; Beispiel 1 * * Seite 2, Absatz 3 * * Seite 4, Absatz 3 - Seite 5, Absatz 3 * | 1-3 | C 08 L 67/06 // (C 08 L 67/06 C 08 L 67:02 C 08 L 71:02 ) |
| A | DE-A-3 943 157 (BASF AG) * Seite 2, Zeile 50 - Zeile 53; Anspruch 1 * * Seite 2, Zeile 56 * | 1 | |
| A | CH-A- 548 434 (REICHHOLD CHEMIE) * Anspruch 1; Beispiel 1 * | 1 | |
| A | US-A-4 245 068 (BREWBAKER, J.L. ET AL.) * Anspruch 1; Beispiel 1 * | 1 | |
| A | EP-A-0 171 591 (BAYER AG) * Anspruch 1 * | 1 | |
| A,D | EP-A-0 335 406 (UNION CARBIDE CORP) * Anspruch 1 * | 1 | |

RECHERCHIERTE SACHGEBIETE (Int. Cl.5)

C 08 L

Der vorliegende Recherchenbericht wurde für alle Patentansprüche erstellt

| Recherchenort | Abschlußdatum der Recherche | Prüfer |
|---|---|---|
| BERLIN | 19-04-1993 | VOIGTLAENDER R O J |

EPO FORM 1503 03.82 (P0403)